**Europäisches Patentamt**

**European Patent Office**

**Office européen des brevets**

(19)

(11) Veröffentlichungsnummer: **0 065 591**

**A1**

(12) **EUROPÄISCHE PATENTANMELDUNG**

(21) Anmeldenummer: 81104064.1

(22) Anmeldetag: 27.05.81

(51) Int. Cl.³: **F 01 C 21/12**
F 01 C 1/356, F 01 C 21/06
F 01 C 19/10, F 02 B 41/00

(43) Veröffentlichungstag der Anmeldung:
01.12.82 Patentblatt 82/48

(84) Benannte Vertragsstaaten:
CH DE FR GB IT LI SE

(71) Anmelder: Ingelheim, Peter, Graf von
Ebersberger Strasse 34
D-8000 München 80(DE)

(72) Erfinder: Ingelheim, Peter, Graf von
Ebersberger Strasse 34
D-8000 München 80(DE)

(54) **Rotationskolbenmaschinen und spezielle Rotationskolbenmaschinen mit Schiebern.**

(57) Die Maschine besteht aus einem in einem Gehäuse (2) in einer Achse (18) drehbar gelagertem Rotationskolben (1). Dabei liegen mehrere, wenigstens zeitweise abgeschlossene Kammern, deren Volumina bei Rotation des Kolbens geändert werden, sternförmig um den Kolben.

Die Füllung und Entleerung dieser Kammern mit flüssigem oder gasförmigem Medium erfolgt über ventilfreie Kanäle (11, 12) im Kolben, wobei die bei der Rotation auftretenden Kräfte genutzt werden, die Füllung und Entleerung dieser Kammern zu erleichtern (z.B. Turboverdichtung).

Die bei der Drehung auftretenden Kräfte werden ebenfalls zur Kühlung des Kolbens (1) genutzt. In Kanälen (4) unter den zu kühlenden Kolbenflächen wird durch diese Kräfte eine Strömung von Kühlmedium erzeugt.

Für eine spezielle Rotationskolbenmaschine mit Schiebern (6), bei der die einzelnen Kammern durch in Schlitzen (23) im Gehäuse bewegliche Schieber voneinander getrennt sind, wird bei Nutzung als Wärmekraftmaschine eine Verbesserung des thermischen Wirkungsgrades zum einen dadurch erreicht, daß das Minimalvolumen der Kammer bei Wärmezuführung über einen Zeitraum beibehalten wird und damit isochore Verbrennung ermöglicht wird. Zum anderen wird bei Nutzung als Verbrennungsmotor das Medium während der Verbrennung nicht bewegt, sodaß eine gleichmäßige Ausbreitung der Flammfront nach allen Seiten und damit eine vollständige Verbrennung des Kammerinhalts ermöglicht wird.

Für diese Maschine werden auch spezielle Dichtungssysteme mit Dichtelementen im Gehäuse (21) und in den Schiebern (7, 8) oder mit Dichtelementen im Kolben (21) und in den Schiebern (7, 8) beschrieben, die auch eine Gasabdichtung im Bereich der zuenander bewegten Dichtelemente ermöglichen.

EP 0 065 591 A1

./...

Figur 1

Rotationskolbenmaschinen und spezielle Rotationskolbenmaschinen mit Schiebern.

Die Erfindung bezieht sich auf Rotationskolbenmaschinen und spezielle Rotationskolbenmaschinen mit Schiebern; dabei werden flüssige oder gasförmige Medien über Kanäle im Kolben aus oder in sternförmig um den Kolben liegende Kammern transportiert und Kolbenflächen gekühlt, wobei die bei einer Drehung entstehenden Kräfte zur Medienbeschleunigung genutzt werden. Gleichzeitig wird bei speziellen Rotationskolbenmaschinen mit Schiebern deren Eigenart für Dichtungssysteme und bei Nutzung als Wärmekraftmaschine zur Verbesserung des thermischen Wirkungsgrads genutzt.

Rotationskolbenmaschinen und Rotationskolbenmaschinen mit Schiebern können eingesetzt werden als Wärmekraftmaschinen, Verdichter, Pumpen usw.

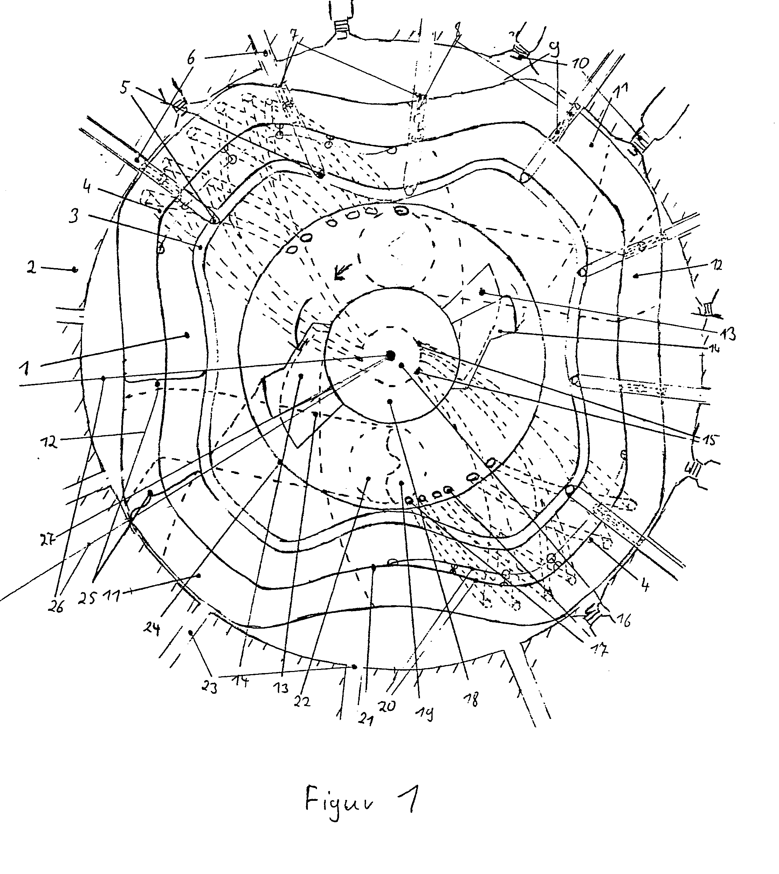

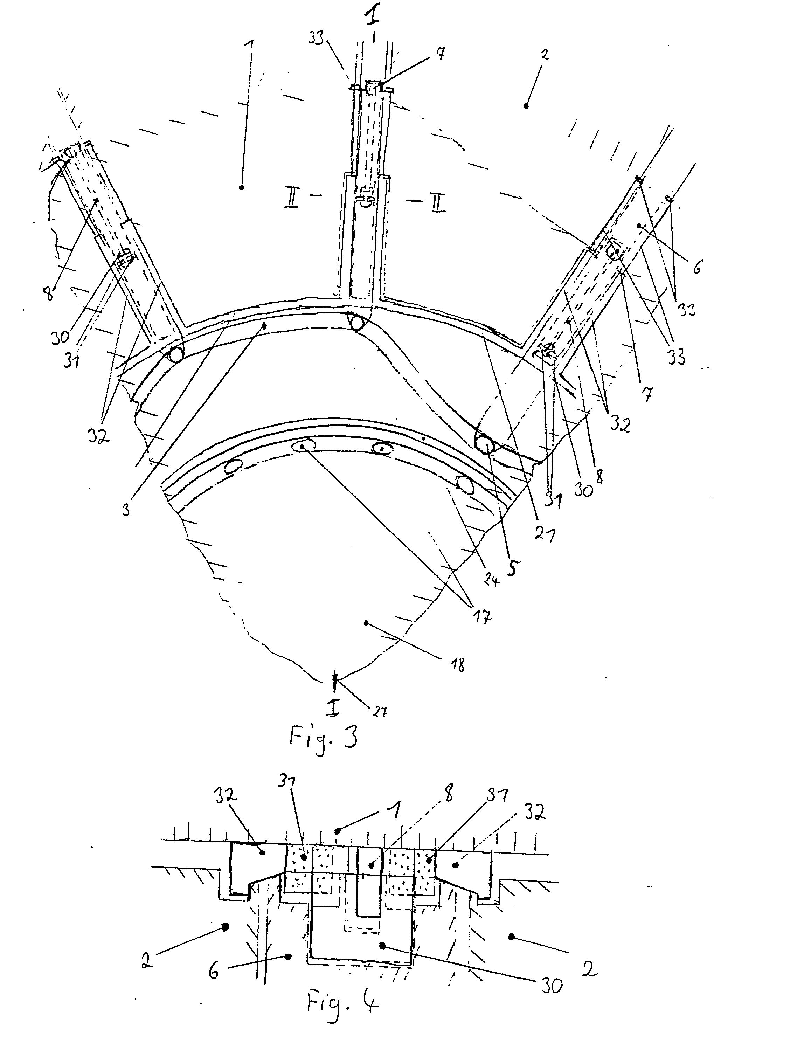

Es ist eine Rotationskolbenmaschine bzw. eine Rotationskolbenmaschine mit Schiebern gemäß des Oberbegriffs der Patentansprüche bekannt, bei der ein Drehkolben in einem Gehäuse drehbar gelagert ist und Schieber in Schlitzen im Gehäuse in Abhängigkeit von der Kolbenstellung hin-und herbewegt werden können, sodaß zwischen Kolben, Gehäuse und zwei benachbarten Schiebern mindestens zeitweise abgeschlossene Kammern entstehen, deren Volumen bei Drehung des Kolbens und gleichzeitiger Bewegung der Schieber in ihren Schlitzen geändert wird (EPA-Patentanmeldung 80104562.6). Solche Maschinen können als Wärmekraftmaschinen, Verdichter oder ähnlich eingesetzt werden. Beispielhaft sollen die Eigenarten der Patentansprüche an dieser Rotationkolbenmaschine gezeigt werden (Fig.1), bei der ein Drehkolben (1) mit Einbuchtungen in einem Gehäuse (2) drehbar gelagert ist und bei der Dichtungsschieber (6) in Schlitzen (23) im Gehäuse liegen, deren Hin-und Herbewegung durch Führungselemente (5) gesteuert wird,
die in Führungsnuten (3) an der Kolbenseite verankert sind
(Patentanmeldung 80104562.6, Patentanspruch 3, Figur 3).
Die Führungsnuten sind in Kurven mit unterschiedlichen
Achsenabständen (= Abstand zur Achsenmitte) an der Kolbenseite um die Achse geführt. In einer senkrecht zur Achsenmittellinie liegenden Projektionsebene (z.B. der in
Figur 1 gezeigte Querschnitt) weist der Kolbenumfang eine
vergrößerte Kurve des Führungsnuts auf d.h. auf jedem
Strahl (26) durch die Achsenmitte ist der Abstand (25)
zwischen Führungsnut und Kolbenoberfläche gleich. Bei
Drehung des Kolbens fahren die Führungselemente der Schieber die Führungsnuten im Kolben entlang und bewegen aufgrund der unterschiedlichen Achsenabstände die Schieber
hin und her. Damit liegen mehrere Kammern,die von Kolben,
Gehäuse und jeweils zwei Schiebern gebildet werden und
deren Volumen bei Kolbendrehung vergrößert, verkleinert
oder konstant gehalten werden kann, ringförmig um den
Kolben.
Diese Maschine ist nach WANKEL eine "drehkolbenartige
Umlaufkolbenmaschine mit hubartigem Eingriff" (F.Wankel,
Einteilung der Rotationskolbenmaschinen....,DVA Stuttgart 1963, S.11 ff). Sie erscheint zur Anwendung als
Wärmekraftmaschine, Verdichter oder Pumpe gut geeignet.

Bei dieser Maschine können zum einen Probleme mit der
Zu- und Abfuhr eines Mediums in die Arbeitskammern auftreten, da aufgrund der Vielzahl von um den Kolben liegenden Arbeitskammern eine entsprechend große Zahl von
Ventilen zur Zu- und Abfuhr des Mediums in die Arbeitskammern notwendig erscheinen könnte (z.B. pro Kammer je
ein Zuführungs- und Abführungsventil).
Zum anderen erscheint eine Kühlung des Kolbens problematisch, da das zur Kühlung der Umfangsflächen innerhalb
des Kolbens dorthin gebrachte Kühlmedium entgegen der
Fliehkraft von dort in Richtung der Achse weggeführt
werden muß.

Zum dritten erscheint eine völlige Gasabdichtung der einzelnen Kammern bei hohen Drücken schwierig, da zwei Dichtungen - die radialen Dichtungen (8) an den Schiebern (6) und die Umfangsdichtung (21) des Kolbens - aufeinander laufen und eine genügende Dichtung zweier aufeinanderlaufender Dichtteile problematisch erscheint.

Hier will die Erfindung Abhilfe schaffen. Die Erfindung, wie sie in den Ansprüchen gekennzeichnet ist, löst unter Verzicht auf Ventile die Aufgabe mehrere Arbeitskammern, die um einen Drehkolben liegen mit einem Medium zu füllen oder diese Kammern zu entleeren, löst die Aufgabe bei um Achsen drehenden bzw. kreisenden Teilen Flächen zu kühlen (oder zu erwärmen) und für Rotationskolbenmaschinen mit Schiebern im Bereich der aufeinanderlaufenden Dichtungen eine hinreichende Dichtigkeit zu gewährleisten. Gleichzeitig ermöglicht die Art der Medienzuführung in die Arbeitskammern bei Wärmekraftmaschinen oder Verdichtern eine Vorverdichtung (Turboverdichtung) und die Art der Medienabführung die Erzeugung eines Saugeffekts zum Leersaugen der Kammern und Kanäle nach Art einer Saugpumpe.
Die durch die Erfindung erreichten Vorteile bezüglich der Medienzu- und -abführung sind im wesentlichen darin zu sehen, daß eine Medienzu- und/oder -abführung über permanent offene Kanäle im Drehkolben geschieht, die so geformt sind, daß im Zuführungskanal(12) das Medium durch Flieh- und Trägheitskraft und durch Staudruck in die Richtung der Arbeitskammern beschleunigt wird (nach Art der Turboverdichter) und bei den Abführungskanälen durch Trägheitskraft und einen am Kanalausgang erzeugten Sog ein Abtransport entgegen der Fliehkraft erleichtert wird. Da die Füllung bzw. die Entleerung einer Arbeitskammer stets dann zu geschehen hat, wenn bestimmte Kolbenflächen an den Kammern entlangstreichen, können in diesen Kolbenflächen die Kanalöffnungen sein.

Die Vorteile der Erfindung bezüglich der Kühlung oder Erwärmung äußerer Kolbenflächen sind im wesentlichen darin zu sehen, daß Kanäle für ein Kühlmedium (oder heißes Medium) im Kolben unter den zu kühlenden (bzw. erwärmenden) Flächen entlanggeführt werden, die durch ihre Form und Lage und die Form und Lage ihrer Ein- und Auslaßöffnungen die Flieh- und Beschleunigungskräfte und Staudrücke nutzen, die bei der Drehung entstehen und damit dem in den Kanälen befindlichen Medium eine Beschleunigung in Richtung Auslaßöffnung verleihen.

Die erreichten Vorteile bezüglich der Abdichtung aufeinanderlaufender Teile entstehen dadurch, daß

entweder 1) sich die Dichtelemente im Gehäuse(2) und in den Schiebern(6) befinden(Patentanspruch 8 ) Damit werden zum einen die Dichtelemente mit wechselnden Drücken beansprucht, was zur Herstellung einer ausreichenden Dichtung mit Schmieröl notwendig ist. (s.a. W.D.BENSINGER, Rotationskolbenverbrennungsmotoren, Springer-Verlag Berlin-Heidelberg-New York 1973,S.10) Zum anderen wird durch das Ineinanderlaufen zweier Dichtteile auch die Abdichtung im Bereich der zueinanderbewegten Dichtelemente garantiert. -

oder 2) sich die Dichtelemente in den Schiebern(6) und im Kolben(1) befinden (Patentanspruch 9). Durch Nebeneinanderlegen mehrerer Dichtelemente im Bereich,wo die Schieberdichtung (8)(9) an der Umfangsdichtung(21) entlangstreift, kann auch bei unterschiedlichen Anstellwinkeln der Umfangsdichtung zum Schieber durch mehrfache,durch Kammerdruck gepreßte Dichtgrenzen eine ausreichende Dichtigkeit erreicht werden.

-5-

Für die geschilderte Rotationskolbenmaschine mit Schiebern in Schlitzen im Gehäuse ergeben sich durch ihre Eigenart Möglichkeiten zur Verbesserung des realen thermischen Wirkungsgrades bei Nutzung dieser Maschine als Wärmekraftmaschine.

Beim bekannten WANKEL-Motor treten Schwierigkeiten bei der restlosen Verbrennung der in den Brennkammern vorhandenen Gase auf, da diese mit höherer Geschwindigkeit an der Zündkerze vorbeigeführt werden, als die Flammfront sich ausbreitet. Daher läßt man das GAs in die Flamme hineinlaufen. Trotzdem werden die Gase in den Ecken gar nicht oder schlecht verbrannt(s.a.BENSINGER,....).
Hier will die Erfindung Abhilfe schaffen. Die Erfindung wie sie gekennzeichnet ist (Patentanspruch 6), hält bei der vorgeschlagenen Maschine das Gas während des gesamten Verbrennungsvorgangs in einer unbewegten Kammer, sodaß sich die Flammfront nach allen Seiten gleich ausbreiten kann.

Eine als Dieselmotor betriebene Hubkolbenmaschine hat einen besseren thermischen Wirkungsgrad als eine als Ottomotor betriebene. Grund dafür ist, daß beim Dieselmotor das gasförmige Medium höher verdichtet wird als beim Ottomotor, bevor ein Verbrennungsvorgang ausgelöst wird. Dennoch könnte der Dieselprozeß, der eine isobare (Gleichdruckverbrennung) bzw. eine gemischte Verbrennung aufweist, weiter verbessert werden, wenn eine isochore (Gleichraum-) Verbrennung stattfände. Dies ist beim Hubkolbenmotor nicht möglich, denn für die gesamte Verbrennung eines Kammerinhaltes wird eine gewisse Zeit benötigt, in der die schnellbewegte Kurbelwelle und damit der Kolben sich ein Stück bewegen. Bei einer hohen Verdichtung aber bewirken schon geringfügige Kolbenhübe eine relativ große Volumenänderung.

Hier will die ErfindungAbhilfe schaffen. Die Erfindung, wie sie in den Ansprüchen gekennzeichnet ist, löst die Aufgabe bei beliebig hoher Verdichtung isochore Verbrennung zu ermöglichen, indem während des gesamten Verbrennungsvorgangs die Kammer auf dem minimalen Verdichtungsvolumen gehalten wird (Patentanspruch 7).

Weitere Einzelheiten sind der nachfolgenden Beschreibung der in denZeichnungen dargestellten Beispiele zu entnehmen, wobei in den Figuren gleiche oder ähnliche Bauteile mit gleichen Bezugszeichen versehen sind.

Es zeigen

Fig. 1: Eine schematische Draufsicht auf den beispielhaft angewandten Motor mit der in Patentanspruch 9 und 10 gekennzeichneten Dichtung, wobei die eine Seite des Gehäuses abgenommen ist und nicht sichtbare Teile durch gestrichelte Linien angedeutet werden.

Fig. 2a und Fig.2b: Kolben in perspektivischer Sicht (ohne Dichtelemente) einmal von der Seite der Auslaßkanalöffnung(Fig.2a) und einmal von der Seite der Einlaßkanalöffnung(Fig.2b).

Fig. 3: Motorsegment mit der in Patentanspruch 8 gekennzeichneten Dichtung.

Fig. 4: Schnitt entlang der Linie II -II in Fig.3 durch das Dichtungssystem zwischen Kolben,Schieber und Gehäuse.

Fig. 5: Schnitt entlang der Linie I-I in Fig.3 durch Kolben und angrenzendes Gehäuse.

Fig. 6: Motorsegment mit der in Patentanspruch 9 gekennzeichneten Dichtung.

Fig. 7: Andere Maschinenausführung nach Patentanspruch 6.

Figur 1 zeigt eine schematische Draufsicht bei abgenommener Seite des Gehäuses auf eine als Viertaktverbrennungsmotor genutzte Rotationskolbenmaschine mit Schiebern. Der

0065591

Kolben(1) ist in der Achse(18) drehbar im Gehäuse(2) gelagert.In den Kammern, die durch zwei in Schlitzen (23) im Gehäuse bewegbar gelagerte Schieber(6), Gehäuseinnenwand und Kolbenwand gebildet werden, sind Zündeinrichtungen(10),womit ein Gas in der Kammer gezündet werden kann. Die Schieber(6) stecken mit Führungselementen(5) in Führungsnuten(3) in der Kolbenseite und werden bei Drehung des Kolbens(1) aufgrund der Form des Führungsnuts(3) und seiner unterschiedlichen Abstände zur Achsenmittellinie(27) in den Schlitzen(23) hin- und herbewegt. Der Führungsnut(3) verläuft zwischen einem äußeren Dichtstreifen(21) (= Umfangsdichtung des Kolbens) und einem inneren Dichtstreifen (24).

Der Kanal(12) für die Zuführung des Arbeitsmediums führt spiralförmig entgegen der Drehrichtung von der Achse(18) weg nach außen. Die Einlaßöffnung (19) für diesen Kanal mit einer Vorrichtung (22), die bei Drehung des Kolbens einen Staudruck auf die Einlaßöffnung bewirkt, befindet sich auf der vom Betrachter abgewandten Seite des Kolbens.

Der Kanal(11) für die Abführung des verbrauchten Mediums führt spiralförmig entgegen der Drehrichtung zur Achse (18) hin. Die Auslaßöffnung (14) dieses Kanals mit der Vorrichtung(13) zur Sogerzeugung auf das im Kanal(11) befindliche Medium befindet sich zwischen der Achse (18) und dem durch die Ausspritzöffnungen (17) der Kühlkanäle (4) gebildeten Ring.

Die Kühlkanäle(4) winden sich spiralförmig unter der Kolbenoberfläche entgegen der Drehrichtung um den Kolben. Sie beginnen in Einlaßöffnungen (15) in der Höhlung (16) der Achse, durch die das Kühlmittel dem Kolben zugeführt wird, und enden in den Ausspritzöffnungen(17) an der einen Kolbenseite.

Als Viertaktverbrennungsmotor ergibt sich damit für die Maschine folgender Funktionsablauf.

Läuft die Kolbenfläche mit der kammerseitigen Öffnung(29) des Einlaßkanals(12) durch den Bereich zweier benachbarter Schieber(6)(=Kammer), dann werden durch die Form der Führungsnuten(3) diese Schieber aus den Schlitzen(23) gezogen und die von diesen beiden Schiebern, der Kolbenoberfläche und der Gehäuseinnenwand gebildete Kammer K wird vergrößert. Durch den Einlaßkanal(12) tritt ein gasförmiges Medium in die Kammer ein, das aufgrund der in Patentanspruch 1 und 2 gekennzeichneten Eigenarten bereits vorverdichtet ist.

Durch weitere Drehung des Kolbens wandert die Kanalöffnung (29) von der Kammer K weg. Diese ist dann vollständig abgeschlossen.

Durch Kolben- und Führungsnutform werden bei weiterer Kolbendrehung die Schieber(6) wieder in die Schlitze(23) gedrückt, das Volumen der Kammer K wird verkleinert, das darin befindliche Medium wird verdichtet.

Hat die Kammer ihr Minimalvolumen erreicht(die Schieber sind dann beide vollständig in ihren Schlitzen verschwunden), wird das Medium gezündet oder ein flüssiger oder gasförmiger Brennstoff eingespritzt. Aufgrund der besonderen Eigenart der Maschine kann das Minimalvolumen der Kammer K über längere Zeit beibehalten werden (Patentanspruch 7), indem man einfach den Abschnitt,auf dem beide Schieber vollständig in ihren Schlitzen verschwunden sind, verlängert. Somit kann man auch bei hoher Verdichtung isochore Verbrennung erreichen.

Bei weiterer Drehung des Kolbens vergrößert sich wieder die Kammer K, wobei durch den Druck auf die Schräge des Kolbens ein Druck in Drehrichtung wirksam wird. Dies ist der Arbeitstakt.

Noch weitere Drehung des Kolbens bringt die Kolbenfläche mit der kammerseitigen Öffnung(28) des Auslaßkanals(12) in den Kammerbereich. Durch Verkleinern der KammerK sowie durch die in Patentanspruch 3 und 4 gekennzeichneten Maßnahmen wird die Kammer K entleert und steht für eine erneute Füllung wieder zur Verfügung.

Da bestimmte Kolbenflächen stets dann an den nebeneinanderliegenden Brennkammern vorbeigeführt werden, wenn das darin befindliche Medium verbrannt wird oder hohe Temperaturen aufweist, sind diese Flächen permanent hohen Temperaturen ausgesetzt. Dies macht eine gute Kühlung dieser Kolbenflächen notwendig, was mit den in Patentanspruch 5 gekennzeichneten Maßnahmen erreicht wird.

Eine Abdichtung der Kammern gegeneinander und zur Achse hin wird durch die in Patentanspruch 8 bzw. die in Fig.1 vorgesehenen Dichtungsmaßnahmen nach Patentanspruch 9 und 10 erreicht.

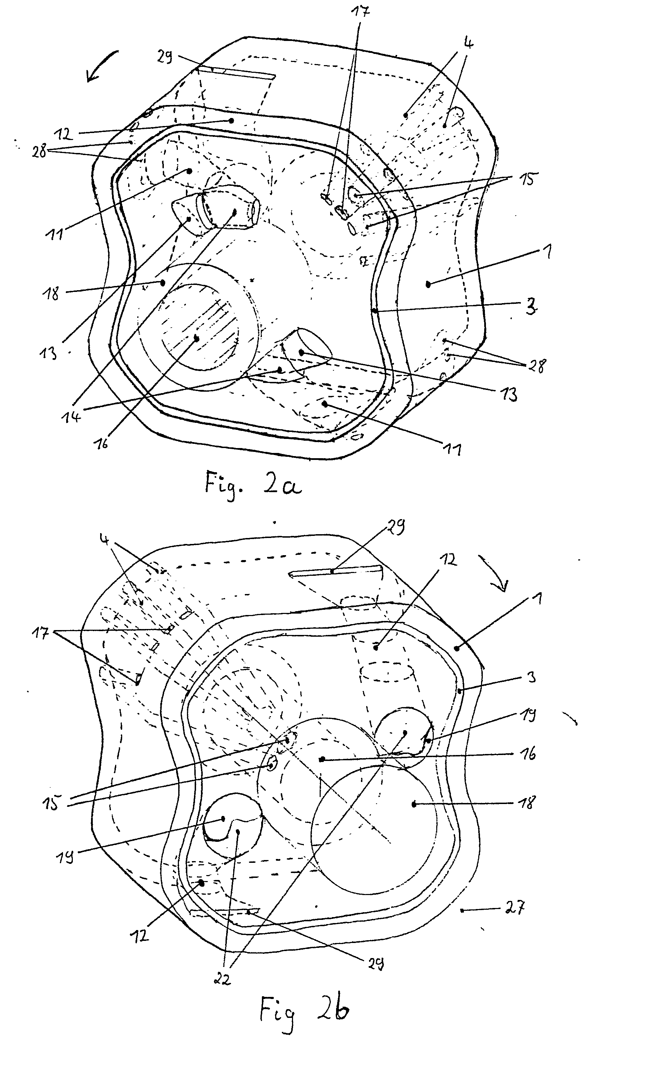

In Figur 2a. und 2b. sind der Kolben von der Seite der Auslaßkanalöffnung (Figur 2a) und einmal von der Seite der Einlaßkanalöffnung(Figur 2b) gezeigt.

Die im Kolben verlaufenden EIn-(12) und Auslaßkanäle(11) für das Medium sowie die Kühlkanäle (4) sind gestrichelt angedeutet. Die kammerseitigen Öffnungen (29) der Einlaßkanäle und die (28) der Auslaßkanäle sind in der Umfangsfläche des Kolbens sichtbar.

In Figur 2a. sind die VORrichtungen(13) zur Sogerzeugung an der Auslaßkanalöffnung(14) so vorgesehen, daß die am Kolben vorbeistreichende Luft durch eine Düse beschleunigt wird, sodaß wie in einer Wasserstrahlsaugpumpe das aus dem Auslaßkanal kommende Medium mitgerissen wird. Die Auslaßöffnungen (17) der Kühlkanäle(4) liegen auch auf dieser Seite. Die Höhlung(16) in der Achse(18),in der das Kühlmedium zugeführt wird, reicht fast bis zur anderen Kolbenseite. Am Ende dieser Höhlung(16) liegen die Einlaßöffnungen(15) für die Kühlkanäle.

Figur 2b. zeigt den Kolben von der anderen Seite. Hier sind die Einlaßöffnungen(19) der Einlaßkanäle(12) zu sehen mit den Vorrichtungen(22), die den Staudruck auf die Kanalöffnungen bewirken, indem sie gleichsam die Öffnung in Drehrichtung stellen.

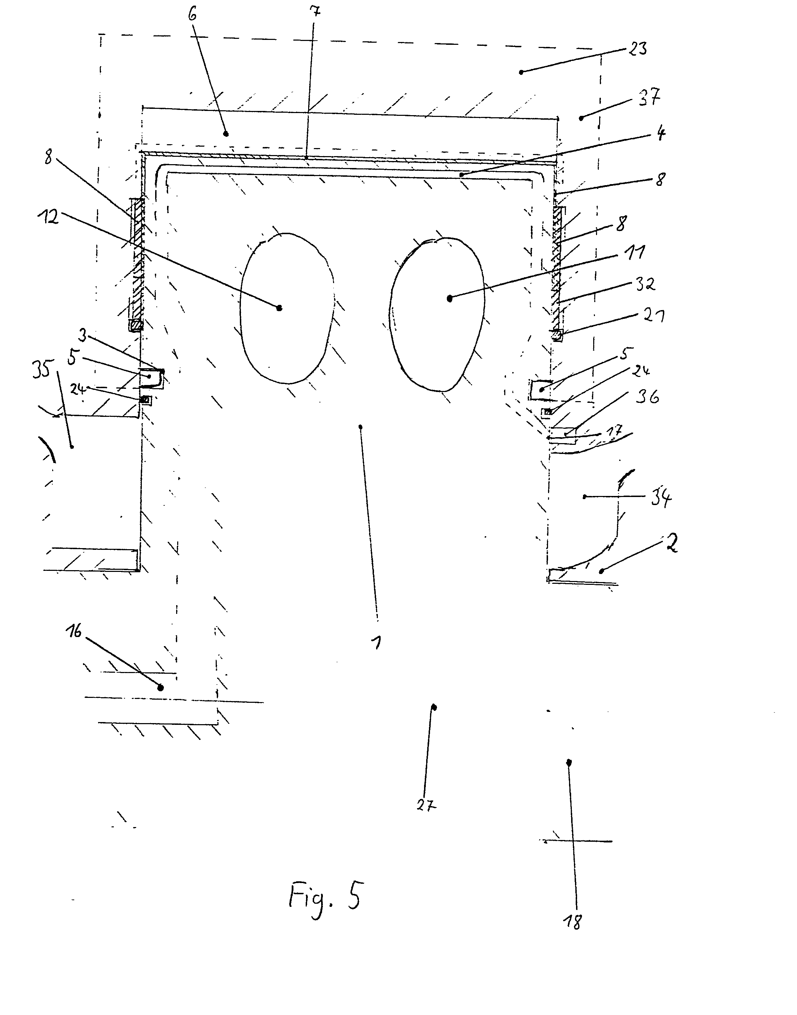

Figur 3 und 4 zeigen ein Beispiel für ein in Patentanspruch 8 gekennzeichnetes Dichtungssystem an einem Motorsegment bzw. an einem Durchschnitt durch Dichtelemente.

Die Umfangsdichtung(21) des Kolbens liegt im Gehäuse(2) und wird durch den Gasdruck und/oder Federdruck gegen die Kolbenseite und die Unterseite des Dichtungsspalts gepreßt. Damit wird eine Dichtigkeit der Brennkammern zum Führungskanal(3) hin erreicht.

Die einzelnen Kammern werden gegeneinander zum einen durch Dichtleisten(7),(8) entlang der Schieberinnenkante abgedichtet, die durch Gasdruck und/oder Federdruck gegen Kolben(1) und kammerabgewandte Seite des Dichtungsspalts gepreßt werden.

Zum andern wird eine Abdichtung der zueinander bewegten Dichtelemente folgendermaßen erreicht. (Siehe dazu auch Figur 4, die einen Schnitt entlang der Linie II -II in Figur 3 darstellt.)

Von den Unfangsdichtungen (21) gehen im Gehäuse befestigte Dichtelemente (32,33) ab, die den Schlitz (23),der zwischen Gehäuse und Schieber bleibt, abdichten. In ihrem unteren Teil(32) verbreitern sie sich und werden durch Feder- und/ oder Gasdruck auch gegen die Kolbenseite gepreßt. Am unteren Ende der radialen Schieberdichtung(8) sitzt ein Dichtbölzchen(30), welches einen Spalt nach oben, in dem die radiale Schieberdichtung(8) steckt, und zwei seitliche Spalte aufweist, in denen zwei Dichtplättchen (31) stecken. Durch den kammerseitigen Druck auf Bölzchen(30) und Dichtplättchen(31) werden die Dichtbölzchen(30) im Schieber an den unteren Rand ihrer Ausfräsung und gegen die Kolbenseite gepreßt und die Dichtplättchen(31) gespreizt, womit sie nach unten gegen die Unterseite des Bölzchenspalts, zur Seite gegen die unteren, verdickten, radialen Schieberschlitzdichtungen(32) und nach vorne gegen die Kolbenseite gepreßt. Damit wird auch in dem kritischen Bereich der zueinander bewegten Dichtelemente hinreichende Dichtigkeit erreicht.

Figur 5 zeigt einen Schnitt entlang der Linie I - I in Figur 3.

Dabei sind der Querschnitt eines Zu-(12) und eines Abführungskanals(11), sowie ein Kühlkanal zu sehen. Der Schieber(6) steckt oben(23) und an der Seite(37) im Schlitz im Gehäuse und schleift mit den Dichtleisten (7,8) am Kolben(1). Die Führungselemente(5) des Schiebers stecken in seitli:hen Führungsnuten(3) im Kolben.

Der Kühlkanal(4) beginnt in der Höhlung(16) der Achse(18) und endet mit der Auslaßöffnung(17) in einem ringförmig um die Achse liegenden Kühlmittelsammler(36) im Gehäuse. Die Höhlung(16) in der Achse wird über Löcher in den Achsenwänden aus einem im Gehäuse liegenden Speicher gespeist, sodaß diese Höhlung(16) ständig mit Kühlmittel gefüllt ist.

Unter dem Kühlmittelsammler(36) liegt ebenfalls ringförmig um die Achse der Nut(34) im Gehäuse, in dem die Auslaßöffnung des Auslaßkanals(11) mit der Vorrichtung zur Sogerzeugung kreist. Dieser Nut ist zur Auspuffanlage hin geöffnet. Auf der gegenüberliegenden Kolbenseite liegt ringförmig um die Achse der Nut(35) in dem die Einlaßöffnung des Einlaßkanals(12) mit dem Staudruckerzeuger kreist. Dieser Nut ist zum Vergaser bzw. bei Einspritzmotoren zur Außenluft geöffnet.

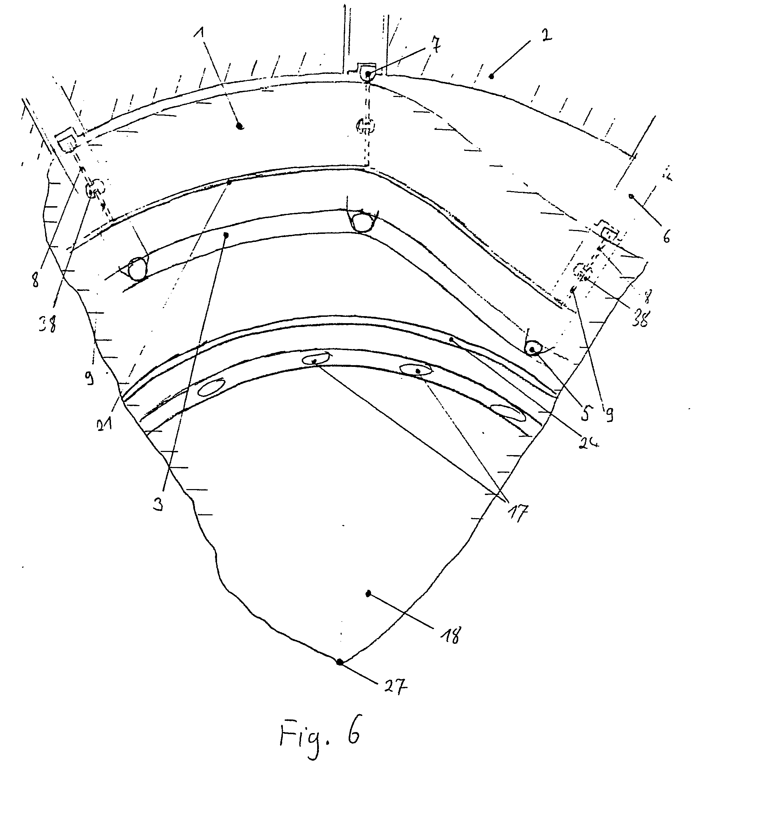

Figur 6 zeigt an einem Motorsegment ein Dichtungssystem nach Patentanspruch 9. Die Umfangsdichtung(21) bildet eine formgleiche, verkleinerte bzw.vergrößerte Kurve zur von der Seite gesehenen Kolbenoberfläche bzw. zum Führungsnut(3). Sie verläuft zwischen diesen beiden. Die radialen Dichtleisten am Schieber(6) sind durch ein Dichtbölzchen(38) in einen oberen(8) und einen unterrn Teil(9) geteilt. Durch den in der Kammer herrschenden Druck wird die untere radiale Dichtleiste(9) gegen die Umfangsdichtung(21) gepreßt. Gasdruck bzw.Federdruck pressen aber die radialen Dichtleisten(8,9) und das Bölzchen(38) auch gegen die kammerabgewandte Seite des Dichtungsspaltes und die und sorgen damit für die radiale Dichtigkeit der Schieberkanten.

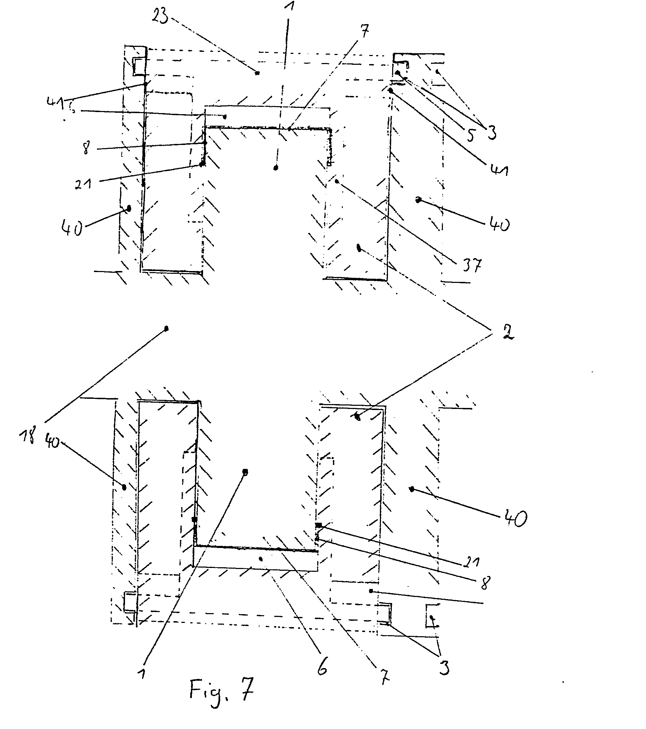

Figur 7 zeigt eine andere Ausführung der in Patentanspruch 6
gekennzeichneten Maschine. Dabei sind die Führungsnuten(3)
in mit der Achse(18) verbundenen, gleichförmig mit dem
Kolben(1) bewegten(relativ zum Kolben also unbewegten)
Scheiben(40). Die Führungselemente(5) der Schieber(6) befinden sich also an den kolbenabgewandten, seitlichen
Schieberkanten. Die Schlitze(23) im Gehäuse(2) sind an den
den Scheiben(40) mit den Führungsnuten zugewandten Seiten
ein Stück (41) offen, damit die Führungselemente hin- und
herbewegt werden können.
Der Vorteil einer solchen Ausführung liegt darin, daß der
Kolben einen geringen Durchmesser erhalten kann bei gleichzeitig genügend großen Führungskurvendurchmessern. Dies
dient dazu eine höhere Drehzahl zu ermöglichen. Ein kleiner
Kolbendurchmesser führt aufgrund eines geringeren Kolbenumfangs zu einer geringen Gleitgeschwindigkeit der Dichtleisten im Schieber. Ein großer Führungskurvendurchmesser
verlängert die Kurvenstrecken auf denen die Schieber
senkrecht zur Drehrichtung bewegt werden und vermindert
damit die Belastung  der Führungselemente(3).

Patentansprüche:

1. Drehkolbenmaschine oder Rotationskolbenmaschine bei der mehrere, zum Gehäuse unbewegte Kammern, deren Volumina bei Rotation des Kolbens(1) geändert werden, sternförmig um den Kolben liegen und die immer dann mit einem Medium gefüllt werden, wenn der Kolben eine bestimmte Stellung zur jeweiligen Kammer hat und damit bestimmte Kolbenflächen $E_i$ an dieser Kammer anliegen,

dadurch gekennzeichnet,

- daß die Zuführung eines oder mehrerer gasförmiger oder flüssiger Medien in die Kammern über im Kolben befindliche, permanent offene (= ventilfreie) Kanäle(12) erfolgt, deren kammerseitige Öffnungen(29) sich in Kolbenflächen $E_i$ befinden und
- daß die Einlaßöffnung (19) des oder der Kanäle (12), durch die das Medium in den Kolben(1) gelangt, einen geringeren Abstand zur Drehachse hat als die kammerseitige Kanalöffnung (29) und daher das im Kolben befindliche Medium in Richtung kammerseitiger Öffnung fliehkraftbeschleunigt wird.

2. Eine Maschine nach Patentanspruch 1 zusätzlich dadurch gekennzeichnet,
- daß die Kanäle (12) im Kolben spiralförmig, entgegen der Drehrichtung nach außen verlaufen,
- daß die Querschnittsflächen der Kanäle sich zur kammerseitigen Öffnung(29) hin verkleinern und
- daß die Einlaßöffnung(19) der Kanäle (12) mit einer Vorrichtung (22) versehen ist, die so geformt ist, daß bei Drehung des Kolbens ein Staudruck auf der Öffnung liegt, der das im Kanal befindliche Medium zur kammerseitigen Öffnung (29) drückt.

3. Drehkolbenmaschine oder Rotationskolbenmaschine bei der mehrere, zum Gehäuse unbewegte Kammern, deren Volumina bei Rotation des Kolbens(1) geändert werden, sternförmig um den Kolben liegen und die immer dann entleert werden, wenn der Kolben eine bestimmte Stellung zur jeweiligen Kammer hat und damit bestimmte Kolbenflächen $A_i$ an dieser Kammer anliegen,

dadurch gekennzeichnet,

-daß die Abführung eines oder mehrerer gasförmiger oder flüssiger Medien aus der Kammer über im Kolben liegende, permanent offene Kanäle(11) erfolgt, deren kammerseitige Öffnungen (28) sich in Kolbenflächen $A_i$ befinden.

4. Eine Maschine nach Patentanspruch 3 zusätzlich dadurch gekennzeichnet,

-daß die Kanäle(11) im Kolben spiralförmig entgegen der Drehrichtung nach innen verlaufen,

-daß an den Auslaßöffnungen(14) der Kanäle(11) Sogerzeuger (13) angebracht sind, die bei Drehung des Kolbens ein Medium mit hoher Geschwindigkeit an den Auslaßöffnungen vorbeistreichen lassen und damit nach Art von Saugpumpen auf das in den Kanälen befindliche Medium einen Sog in Richtung Auslaßöffnung erzeugen.

5. Drehkolbenmaschine oder Rotationskolbenmaschine oder Maschine mit drehenden oder kreisenden Teilen bei der der drehende oder kreisende Kolben oder das drehende oder kreisende Teil (1) fest mit der Drehachse(18) verbunden ist und an dem bestimmte Flächen dadurch gekühlt oder erwärmt werden, daß innerhalb des Kolbens(1) oder drehenden oder kreisenden Teils befindliche, mit einem Wärmetauschermedium gefüllte Kanäle(4) an diesen Flächen vorbeigeführt werden und über Einlaß- (15) und Auslaßöffnungen(17) aus einem außerhalb des Kolbens oder des drehenden oder kreisenden Teils gelegenen Speicher Wärmetauschermedium zugeführt werden kann und in diesen
Speicher abgeführt werden kann, dadurch gekennzeichnet,

-daß die Einlaßöffnung(15) des Kanals(4) einen geringeren
Abstand zur Mittellinie(27) der Achse(18) hat als die Auslaßöffnung(17) und daher bei Drehung des Teils ein von der
Differenz dieser beiden Abstände abhängiger Fliehkraftüberschuß von der Einlaßöffnung weg wirkt,

-daß,in Drehrichtung betrachtet, die Einlaßöffnung(15)
eines Kanals(4) vor seiner Auslaßöffnung(17) liegt und daher durch die Trägheit des Mediums eine Beschleunigung von
der Einlaß- zur Auslaßöffnung auf dieses Medium wirkt,

-daß die Einlaßöffnung(15) des Kanals(4) in einem mit dem
Wärmetauschermedium gefüllten Behälter(16) kreist, sodaß
nur Wärmetauschermedium durch die Einlaßöffnung in den
Kanal gelangen kann,

-daß die Auslaßöffnung(17) des Kanals(4) in einen außerhalb
des Kolbens oder drehenden oder kreisenden Teils(1) gelegenen,zum Kolben oder rotierenden Teil(1) ringförmig um
die Achse(18) geöffneten Behälter(36) führt und dort das
abgeleitete Wärmetauschermedium gesammelt und einem Erwärmungs- oder Kühlsystem zugeführt wird.

6. Maschine unter Patentanspruch 1,2,3,4 oder 5
zusätzlich dadurch gekennzeichnet,
-daß eine Rotationskolbenmaschine mit Schiebern als
Wärmekraftmaschine oder Verdichter genutzt wird, bei der
in einem Gehäuse(2) ein Rotationskolben(1) in einer
Achse(18) drehbar gelagert ist und Schieber(6) in Schlitzen(23) im Gehäuse hin- und herbewegt werden können,
die mit Führungselementen(5), die in Führungsnuten(3)
im Kolben(1) oder in an der Achse befestigten,gleichförmig mit dem Kolben bewegten TEilen(40) stecken, bei
Drehung des Kolbens aufgrund der Form der Führungsnuten
und der Kolbenoberfläche so bewegt werden, daß sie an der
Kolbenoberfläche Schleifen und zwischen jeweils zwei benachbarten Schiebern, der Kolbenoberfläche und der Gehäuseinnenwand sternförmig um den Kolben liegende, wenigstens zeitweise abgeschlossene Kammern gebildet werden,

-daß bei Nutzung dieser Maschine als Verbrennungsmotor während des Verbrennungstaktes das als Brennstoff genutzte Medium und das gasförmige Medium relativ zum Gehäuse unbewegt bleibt, sodaß von einer im Gehäuse(2) liegenden Zündeinrichtung(10) sich die Flammfront nach allen Seiten gleich ausbreitet.

7. Maschine unter Patentanspruch 6 die als Verbrennungsmotor genutzt wird,

zusätzlich dadurch gekennzeichnet, -daß das minimale Verdichtungsvolumen bei der Wärmezuführung über einen Zeitraum beibehalten wird.

8. Maschine unter Patentanspruch 6 oder 7,

zusätzlich dadurch gekennzeichnet,

-daß Dichtungen(21) für die Umfangsdichtung in den Seitenwänden des Gehäuses(2) liegen und zwar in vollständig geschlossenen Kurven um die Achse(18) oder in Abschnitten geschlossener Kurven, zwischen denen sich radiale Schieberschlitze befinden,

-daß sich entlang der am Kolben (1) schleifenden Schieberkanten Dichtleisten (7)(8) befinden, die durch Federkraft und/oder durch Pressung des Kammerdrucks gegen die Kolbenfläche gepreßt werden und in Gehäuse und Schieber in den Bereichen, wo sich Umfangsdichtung und radiale Schieberdichtungen nahekommen, Dichtelemente(31,32) oder Dichtbölzchen(30) sind, die durch gasdichte Befestigung, Federdruck und/oder Pressung durch den Kammerdruck die durch Gehäuse, Schieber und Kolben gebildete Ecke abdichten.

9. Maschine unter Patentanspruch 6 oder 7

zusätzlich dadurch gekennzeichnet,

-daß die Dichtungsstreifen(21) für die Umfangsdichtung des Kolbens(1) sich im Kolben befinden und in einer zum Führungsnut(3) gleichförmigen,Konzentrischen Kurve zwischen Kolbenumfang und Führungsnut um die Achse(18) läuft, die Schieber(6) entlang der am Kolben schleifenden Kanten Dichtleisten (7)(8) enthalten, die durch Federkraft und/oder Pressung des Kammerdrucks gegen die Kolbenfläche gedrückt werden, und zur Abdichtung der Orte, an denen die unteren Enden(9) der radialen Dichtleisten(8) der Schieber und die Umfangsdichtung gegeneinander abgedichtet werden müssen, die unteren Enden(9) der radialen Dichtleisten über ein Dichtbölzchen(36) so mit der übrigen radialen Dichtleiste(8) verbunden sind, daß durch den Kammerdruck das untere Ende (9) der radialen Dichtleiste gegen die Umfangsdichtung gepreßt wird und durch das Dichtbölzchen die radiale Dichtigkeit erhalten bleibt.

10. Maschine unter Patentanspruch 9,
zusätzlich dadurch gekennzeichnet,
-daß das untere Ende (9) der radialen Schieberdichtung aus mehreren parallel liegenden Dichtelementen besteht.

Figur 1

Fig. 2a

Fig 2b

Fig. 3

Fig. 4

Fig. 5

Fig. 6

0065591

Fig. 7

**Europäisches Patentamt**

**EUROPÄISCHER RECHERCHENBERICHT**

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |

| | | | |
|---|---|---|---|
| X | <u>US - A - 2 366 213</u> (POVER) <br> * Seite 1, linke Spalte, Zeilen 20-31; Seite 2, linke Spalte, erster und vorletzter Absatz; rechte Spalte, erster und zwei letzte Absätze; Figuren 1,2,4-6; Seite 3; Seite 4, Absatz 3 * | 1-6 | F 01 C 21/12 <br> 1/356 <br> 21/06 <br> 19/10 <br> F 02 B 41/00 |
| | -- | | |
| X | <u>US - A - 3 539 280</u> (RAVERA) <br> * Spalte 2, Zeilen 3-23 und letzter Absatz; Figur 1; Spalte 3, Zeilen 1-33 * | 1,3,6 | |
| | -- | | **RECHERCHIERTE SACHGEBIETE (Int. Cl.³)** |
| | <u>GB - A - 265 220</u> (MADSEN) <br> * Seite 1, letzter Absatz; Figuren; Seite 2, Zeilen 1-15 * | 6 | F 01 C <br> F 04 C <br> F 02 B |
| | -- | | |
| | <u>DE - A - 1 451 715</u> (DURDUMAS) <br> * Seite 2, zwei letzte Absätze; Bilder 1-3; Seite 5, zwei letzte Absätze; Seite 6, Bilder 5,6 * | 6 | |
| | -- | | **KATEGORIE DER GENANNTEN DOKUMENTE** |
| X | <u>US - A - 3 244 157</u> (TANFERNA) <br> * Spalte 2, Zeilen 40-56; Figur 2; Spalte 3, Zeilen 1-30; Figuren 3-5 * | 1,3,6, 9 | X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D: in der Anmeldung angeführtes Dokument <br> L: aus andern Gründen angeführtes Dokument |
| | -- | | |
| | <u>US - A - 3 932 076</u> (THIBAULT) <br> * Spalte 2, zwei letzte Zeilen; Spalte 3, ausgenommen letzten Absatz; Figuren 1-4 * | 1-4 | |
| | -- ./. | | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 01-02-1982 | KAPOULAS |

EPA form 1503.1   06.78

00655591

Europäisches
Patentamt

**EUROPÄISCHER RECHERCHENBERICHT**

Nummer der Anmeldung

EP 81 10 4064
-2-

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| A | <u>DE - C - 709 134</u> (SCHLOTTER)<br>* Seite 2, letzter Absatz; Seite 3, erster Absatz; Figur 1 *<br><br>-- | 4 | |
| A | <u>GB - A - 2 018 899</u> (WANKEL)<br>* Seite 1, Zeilen 71-92; Figur 1 *<br>& DE - A - 2 912 908<br><br>-- | 4 | |
| A | <u>DE - A - 2 649 092</u> (CATERPILLAR)<br>* Seite 12, Absatz 1 und Absatz 2, sechs erste Zeilen; Figuren 1,2 *<br><br>---- | 5 | RECHERCHIERTE SACHGEBIETE (Int. Cl.³) |

EPA Form 1503.2   06.78